# FASCICULE DE BREVET EUROPEEN

(11) **EP 0 828 934 B1**
(45) Date de publication et mention de la délivrance du brevet: **05.09.2001**
(21) Numéro de dépôt: 96918730.1
(22) Date de dépôt: 29.05.1996
(51) Int. Cl.: F02K 1/70, F02K 1/60

(54) **ENSEMBLE D'INVERSEUR DE POUSSEE A DEUX PORTES**
SCHUBUMKEHRVORRICHTUNG MIT ZWEI KLAPPEN
DOUBLE DOOR THRUST REVERSER ASSEMBLY

(30) Priorité: 02.06.1995 FR 9506561
(43) Date de publication de la demande: 18.03.1998
(73) Titulaire: SOCIETE DE CONSTRUCTION DES AVIONS HUREL-DUBOIS, F-92360 Meudon la Forêt (FR)
(72) Inventeur: FOURNIER, Alain, F-92350 Le-Plessis-Robinson (FR); LABOURE, Bernard, F-78140 Vélizy-Villacoublay (FR)
(74) Mandataire: Sauvage, Renée
(86) Numéro de dépôt international: FR9600804
(87) Numéro de publication internationale: WO9638661

(56) Documents cités:
- EP-A- 0 048 669
- EP-A- 0 574 730
- FR-A- 2 697 292
- US-A- 3 050 937

## Description

La présente invention concerne les ensembles d'inverseur de poussée pour moteur à réaction à double flux du type à portes pivotantes.

On connaît déjà des inverseurs de ce type dans lesquels les portes sont articulées autour de pivots dans une structure fixe d'un capotage extérieur entourant le moteur, à peu près concentriquement à l'axe longitudinal dudit moteur, ce capotage extérieur délimitant, avec la tuyère d'éjection d'un flux de gaz primaires chauds, un canal annulaire pour la circulation d'un flux de gaz secondaires froids provenant d'une soufflante amont. Dans ce type d'installation, les portes pivotantes sont mobiles, sous l'action d'un système de commande, entre une position escamotée, dans laquelle elles obturent des ouvertures pratiquées dans la structure fixe du capotage, et une position déployée dans laquelle lesdites portes font saillie radialement vers l'extérieur et obturent le canal annulaire pour dévier le flux de gaz secondaires.

Ainsi par exemple, FR-A-2 622 928, déposé le 5 novembre 1987, décrit un système d'inverseurs à portes dans lequel les portes, en position escamotée, constituent l'extrémité aval de la paroi extérieure du canal annulaire, lesdites portes étant articulées sur des poutres longitudinales en porte-à-faux. Ce type d'inverseurs à portes arrière présente l'avantage de permettre un débattement sans obstacle des portes lorsqu'on les actionne et d'assurer, en position déployée des portes, un dégagement maximal de l'ouverture, ou puits d'inversion, par laquelle les gaz secondaires sont déviés. Cela est dû au fait que les axes de pivotement des portes peuvent être placés très près du plan passant par l'axe du moteur.

Toutefois, cette disposition a pour conséquence que l'extrémité aval des poutres sur lesquelles sont articulées les portes ne sont pas maintenues rigidement, puisqu'elles sont en porte-à-faux, ce qui, du fait des efforts importants s'exerçant sur cette zone lorsque les portes sont déployées, risque d'entraîner des dysfonctionnements graves, voire une détérioration des structures. Par ailleurs, il est évident qu'une telle solution ne pourrait convenir dans le cas où le débattement vers l'arrière des portes serait limité par les caractéristiques de construction du moteur. Ces inconvénients deviennent particulièrement critiques dans le cas où l'on souhaite disposer d'un inverseur à deux portes seulement.

On connaît également, d'après EP-A-0 048 669 un inverseur de poussée dont les portes, constituées chacune d'une demi-coquille, pivotent chacune autour d'un axe incliné sur la verticale, grâce à deux articulations placées l'une à l'extrémité supérieure, l'autre à l'extrémité inférieure de chaque demi-coquille.

La présente invention propose une solution simple, alliant sécurité améliorée de l'inverseur et économie de conception, dans l'optique d'un inverseur à deux portes. Selon l'invention, un ensemble d'inverseur de poussée à deux portes se caractérise par le fait que
- la structure fixe du capotage est constituée d'un avant-corps annulaire situé en amont des portes pivotantes, de deux poutres longitudinales symétriques et parallèles à l'axe du moteur, et d'un arrière-corps annulaire situé en aval des portes pivotantes et solidaire des poutres longitudinales et de l'avant-corps ;
- et, pour chacune des portes, au moins deux membrures solidaires de la structure fixe du capotage s'étendent, symétriquement par rapport à un plan passant par l'axe du moteur et la ligne médiane longitudinale des portes, jusqu'à une région située dans la moitié supérieure de la distance séparant l'axe du moteur de la ligne médiane longitudinale de chaque porte, lesdites membrures portant les pivots de portes.

Ainsi, par la présence de l'arrière-corps annulaire solidaire de la structure fixe, on obtient une tenue optimale des poutres longitudinales en évitant tout risque de voir les portes se séparer de leurs pivots, ce qui accroît la sécurité. Et, par ailleurs, le fait de remonter les pivots de portes à un niveau inaccoutumé par rapport à l'axe du moteur, permet d'obtenir une ouverture maximale des portes et donc d'assurer une déviation correcte du flux de gaz secondaires.

De préférence, selon l'invention, les membrures s'étendent à peu près jusqu'aux deux-tiers de la distance séparant l'axe du moteur de la ligne médiane longitudinale de chaque porte, en partant de l'axe du moteur. Une disposition particulièrement remarquable des pivots, parce qu'elle fournit une efficacité optimale, est celle dans laquelle ceux-ci sont situés approximativement aux deux-tiers de la distance séparant l'axe du moteur de la ligne médiane longitudinale de la porte, en partant de l'axe du moteur.

Toujours selon l'invention, les membrures sont situées dans le même plan que la structure fixe du capotage afin de ne pas gêner la manoeuvre des portes. Les membrures peuvent être solidaires de l'avant-corps annulaire du capotage en s'étendant: longitudinalement vers l'arrière-corps ; ou être solidaires des poutres longitudinales de la structure fixe du capotage et, dans ce cas, elles ont une forme courbe pour épouser la courbure dudit capotage.

Cependant, selon une forme de réalisation préférée de l'invention, à chacune des portes sont associées deux paires de membrures symétriques par rapport à la ligne médiane longitudinale de la porte, chaque paire de membrures étant constituée d'une première membrure solidaire de l'avant-corps annulaire du capotage et d'une seconde membrure solidaire, quant à elle, d'une poutre longitudinale du capotage, ces deux membrures étant rigidement liées l'une à l'autre. Dans ce cas, chaque pivot de porte est situé à l'intersection des deux membrures.

On ajoutera que les membrures courbes solidaires des poutres longitudinales sont situées au-delà des deux-tiers de la distance séparant avant-corps et arrière-corps, en partant de l'avant-corps, une disposition préférée de ces membrures étant comprise entre les deux-tiers et les trois-quarts de ladite distance.

D'autres caractéristiques et avantages de la présente invention apparaîtront dans le cours de la description suivante, donnée à titre d'exemple non limitatif, en référence aux dessins annexés, dans lesquels:
- la figure 1 représente, en perspective, l'arrière d'un moteur à réaction équipé d'un ensemble inverseur de poussée à deux portes selon l'invention et monté sous une voilure d'avion, les portes d'inverseur étant en position escamotée (c'est-à-dire fermée) ;
- la figure 2 est une vue similaire à celle de la figure 1 montrant l'inverseur en position de portes déployées (c'est-à-dire ouvertes) ;
- la figure 3 représente schématiquement en perspective un ensemble d'inverseur de poussée selon l'invention, monté, cette fois, sur l'arrière du fuselage ;
- la figure 4 est une vue en perspective schématique d'une porte d'inverseur selon l'invention où la flèche indique la direction vers l'avant ;
- la figure 5 est une vue en élévation d'une porte fermée,
- la figure 6 est une vue similaire à la figure 5 mais avec arrachement partiel de la porte représentée, cette fois, en position ouverte ; et
- les figures 7 et 8 sont des variantes de réalisation de l'ensemble d'inverseur selon l'invention, l'ensemble étant monté sur l'arrière du fuselage à la figure 7 et sous la voilure à la figure 8.

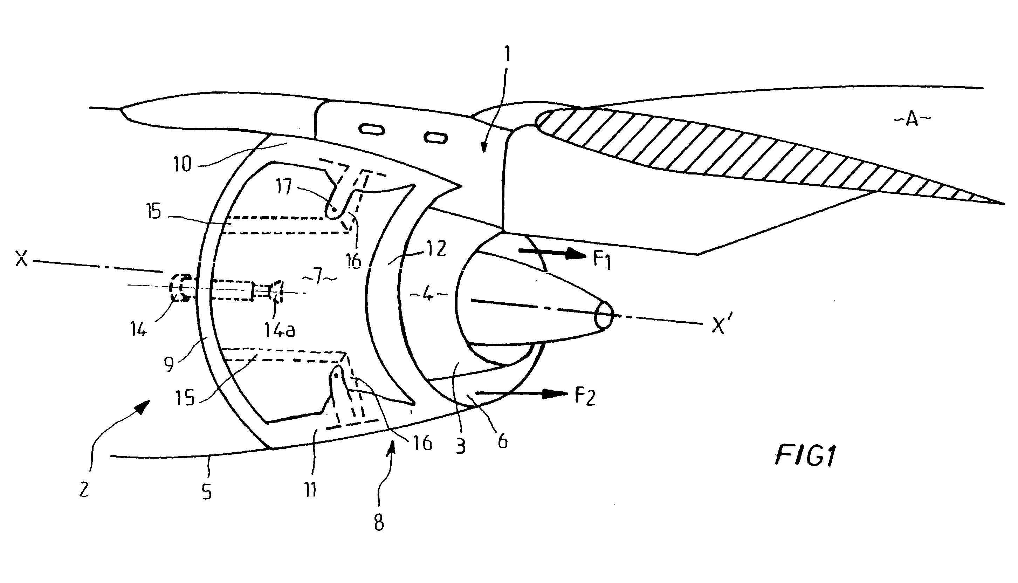

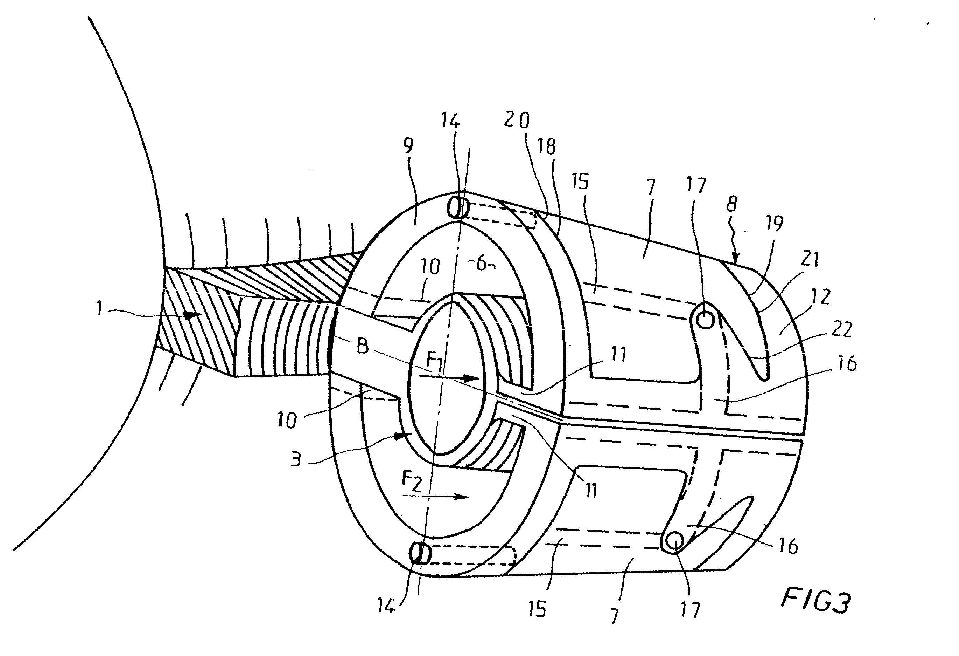

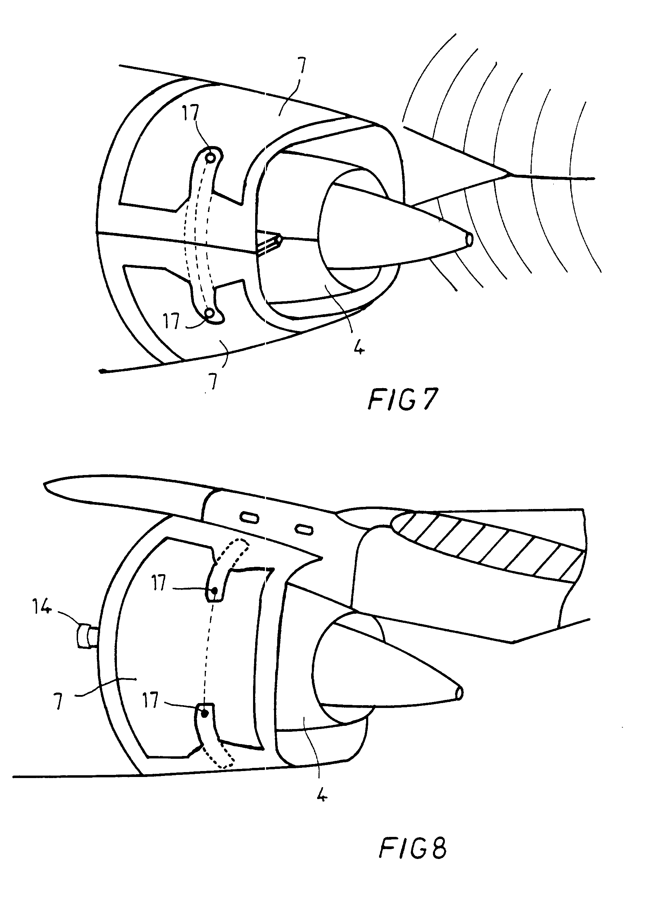

A la figure 1, on a représenté la partie arrière d'un groupe nacelle-moteur à réaction 2 monté, par l'intermédiaire d'une structure porteuse 1, sous la voilure A d'un avion. On comprendra cependant que ce groupe pourrait être fixé en tout autre endroit approprié de l'avion, par exemple sur l'arrière du fuselage, comme représenté aux figures 3 et 7. Le moteur est un moteur à double flux classique présentant une tuyère 3 par où s'échappent, selon la flèche F₁, les gaz chauds du moteur, un capotage extérieur désigné de façon générale en 5, entourant le moteur et la tuyère 3 d'éjection de gaz chauds. Entre le capotage extérieur 5 et la surface externe 4 de la tuyère est ménagé un canal annulaire 6 (figure 3) permettant la circulation, selon la flèche F₂, du flux froid en provenance d'une soufflante amont non représentée.

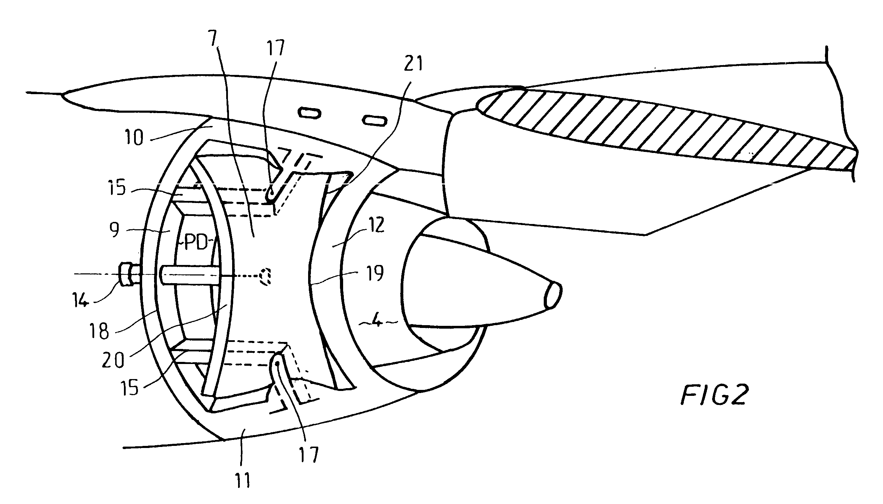

On a désigné de façon générale en 8 l'ensemble d'inversion de poussée proprement dit, et en 7 les portes pivotantes qui sont logées dans une ouverture ou puits d'inversion PD qu'elles obturent ou dégagent selon qu'elles sont en position escamotée (figure 1) ou en position déployée (figure 2). Le puits d'inversion est délimité par une structure fixe comprenant un avant-corps annulaire 9, des poutres longitudinales 10 et 11 (voir figure 3), et un arrière-corps annulaire 12, les poutres, l'arrière-corps et l'avant-corps étant rigidement liés les uns aux autres ainsi qu'à la structure de l'avion par un mât B. Chacune des deux portes 7 est attelée en 14a à l'extrémité d'un vérin de commande 14 fixé par son autre extrémité dans la structure fixe du capotage.

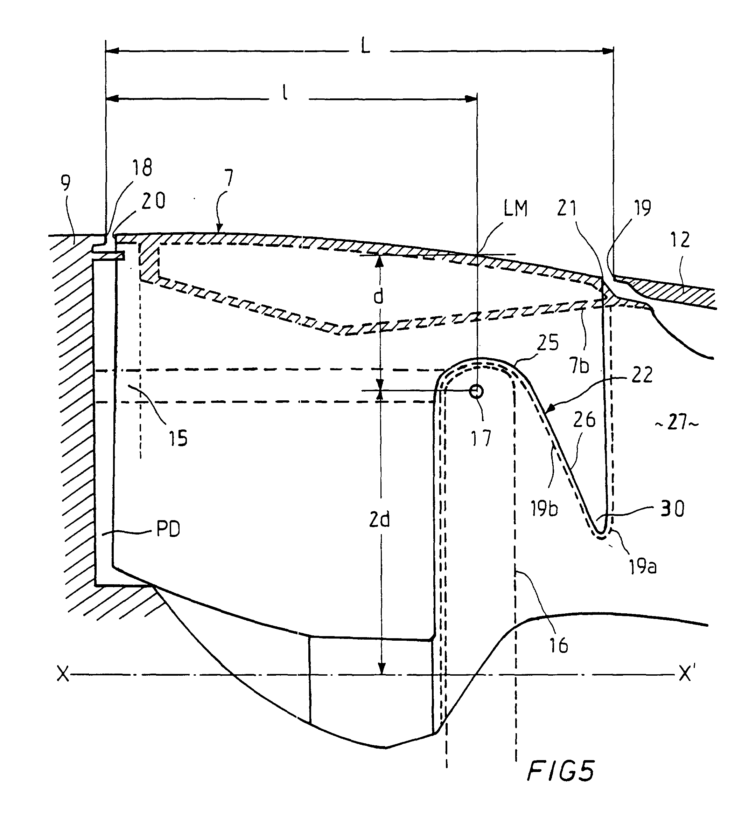

Deux membrures 15 solidaires de l'avant-corps fixe 9 s'étendent, dans le plan du capotage, longitudinalement en direction de l'arrière-corps 12, alors que deux autres membrures courbes 16, solidaires des poutres longitudinales 10,11, s'étendent l'une vers l'autre, dans le plan de la porte 7, en direction de la ligne médiane LM longitudinale de celle-ci. Les membrures 15 et 16 de chaque paire de membrures avoisinantes sont solidarisées à leur point d'intersection qui sert également d'assise au pivot 17 autour duquel pivote la porte 7. Comme on le voit aux figures 3 et 5, en position de portes fermées, les bords avant 20 et arrière 21 de celles-ci viennent affleurer les bords avant 18 et arrière 19 de la structure fixe du capotage.

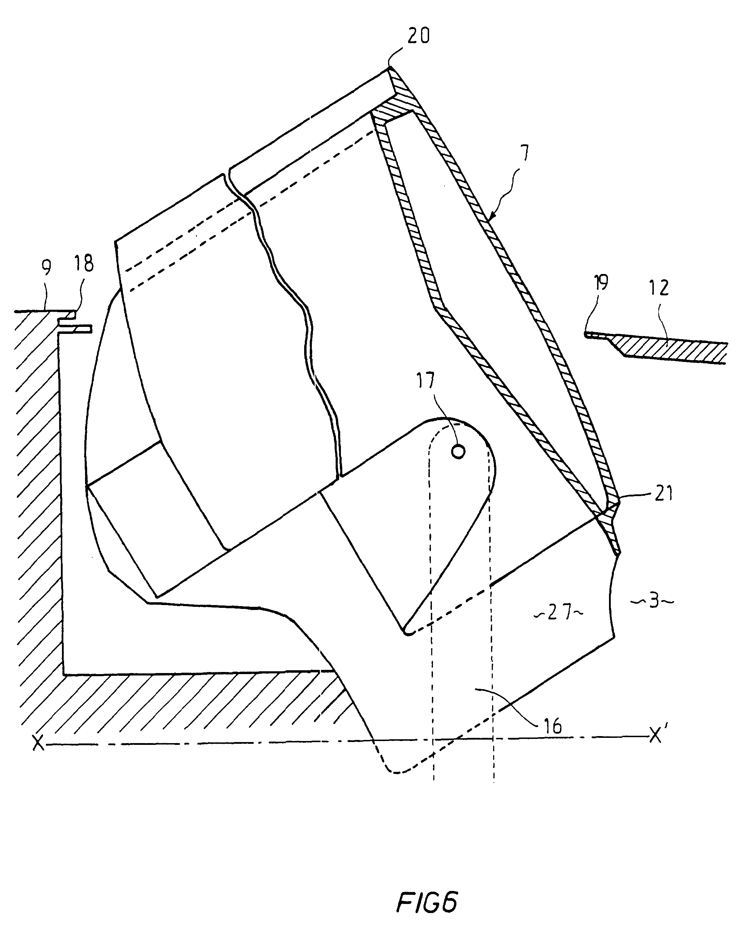

On précisera à présent, en référence à la figure 5, la position tout à fait particulière des pivots 17, caractérisant l'invention. Si l'on considère que la distance séparant l'axe X-X' du moteur de la ligne médiane LM de la surface extérieure de la porte 7 en position fermée, est égale à 3d, le pivot 17 se trouve environ aux deux-tiers (2d) de cette distance à partir de l'axe X-X'. C'est grâce à cette situation élevée par rapport à l'axe X-X' du moteur que l'on peut obtenir une ouverture maximale de la porte 7 comme représenté à la figure 6, sans être gêné par la présence de l'arrière-corps fixe 12.

Par ailleurs, la distance "l" séparant le pivot 17 du bord 18 de l'avant-corps fixe 9, est avantageusement comprise entre les deux-tiers et les trois-quarts de la distance "L" séparant les bords 18 et 19 des avant-corps et arrière-corps fixes.

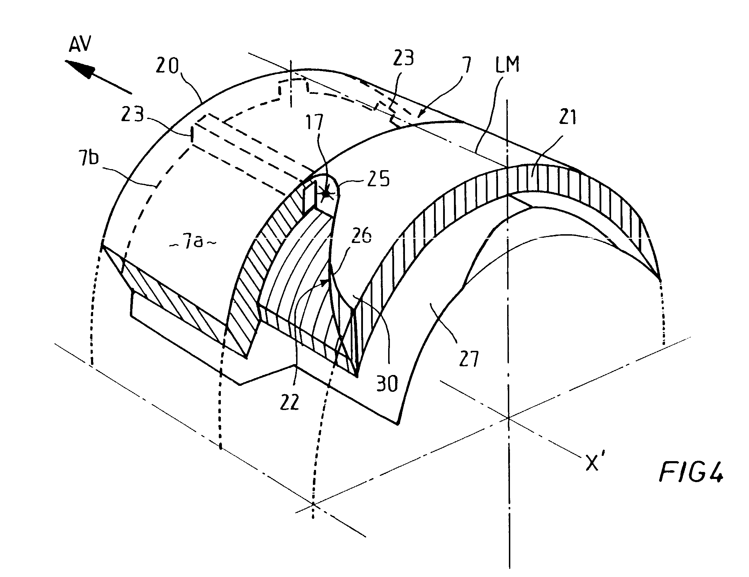

On décrira maintenant plus en détail la structure des portes 7, laquelle est définie pour permettre un fonctionnement tenant compte du positionnement des pivots. Comme on peut le voir à la figure 4, dans la zone où la porte est articulée aux pivots, la face interne 7b de la porte 7 présente, dans son épaisseur, deux logements 23 longitudinaux de forme complémentaire de celle des membrures 15, de telle sorte que celles-ci s'emboîtent aisément dans lesdits logements 23 lorsque les portes 7 sont fermées. Ces logements 23 ont la forme de deux saignées parallèles. Dans l'épaisseur de la face externe 7a de la porte (figures 4 et 5), on a prévu deux logements symétriques désignés de façon générale en 22. Ces logements 22 ont sensiblement la forme d'un triangle dont le sommet 25 avoisine le pivot 17 de porte 7 et dont la base débouche sur le bord longitudinal de la porte et vers l'arrière de celle-ci, l'hypoténuse 26 du logement triangulaire 22 dessinant avec le bord arrière 21 de la porte, une forme en queue d'aronde 30.

Les figures 4, 5 et 6 montrent clairement que la face interne 7b de la porte 7 déborde largement en 27, notamment vers l'arrière, de façon à pouvoir, comme le montre la figure 6, venir coiffer exactement le galbe de la surface externe 4 de la tuyère 3, afin de bloquer efficacement le flux secondaire F₂ et le dévier radialement vers l'extérieur à travers le puits d'inversion PD lorsque l'on commande l'ouverture des portes. On notera que, grâce à la position des pivots 17, les portes 7 peuvent s'ouvrir d'un angle maximal et en tout état de cause supérieur à 45°, ce qui assure une déviation de jet efficace. On notera enfin que le bord latéral du puits d'inversion PD présente, de préférence, un profil 19a-19b (voir figures 5 et 6) qui correspond sensiblement à la forme en queue d'aronde 30 de l'arrière de la face externe 7b de la porte 7.

Les figures 7 et 8 montrent, à titre d'exemples, d'autres dispositions et d'autres formes que pourrait prendre l'ensemble nacelle-moteur. Dans ces figures, les mêmes références désignent les mêmes pièces qu'aux figures 1 à 6. Notamment, au lieu d'être en présence, comme dans les figures 1 à 6, d'une nacelle de forme sensiblement circulaire, on pourrait utiliser l'invention pour des nacelles de forme quadrangulaire (figure 7) sans sortir du cadre de l'invention, l'ensemble nacelle-moteur étant monté sur l'arrière du fuselage à la figure 7 et sous la voilure à la figure 8.

## Revendications

1. Ensemble d'inverseur de poussée pour moteur à réaction à double flux du type à deux portes pivotantes (7) articulées autour de pivots (17) dans une structure fixe d'un capotage extérieur (5) entourant le moteur, à peu près conceritriquement à l'axe longitudinal (X-X') dudit moteur, ledit capotage extérieur (5) délimitant, avec la tuyère (3) d'éjection d'un flux de gaz primaires chauds (F₁), un canal annulaire (6) pour la circulation d'un flux de gaz secondaires froids (F₂), lesdites portes pivotantes (7) étant mobiles, sous l'action d'un système de commande, entre une position escamotée, dans laquelle elles obturent des ouvertures (PD) pratiquées dans la structure fixe du capotage et une position déployée dans laquelle lesdites portes (7) font saillie radialement vers l'extérieur et obturent le canal annulaire (6) pour dévier le flux de gaz secondaires (F₂), ledit ensemble d'inverseur de poussée étant **caractérisé en ce que**:
- la structure fixe du capotage (5) est constituée d'un avant-corps annulaire (9) situé en amont des portes pivotantes (7), de deux poutres longitudinales (10,11) symétriques et parallèles à l'axe (X-X') du moteur, et d'un arrière-corps annulaire (12) situé en aval des portes pivotantes (7) et solidaire des poutres longitudinales (10,11) et de l'avant-corps (9) ;
- et, pour chacune des portes (7) au moins deux membrures (15 ou 16) solidaires de la structure fixe du capotage (5), s'étendent, symétriquement par rapport à un plan passant par l'axe du moteur (X-X') et la ligne médiane (LM) longitudinale des portes (7), jusqu'à une région située dans la moitié supérieure de la distance (3d) séparant l'axe du moteur (X-X') de la ligne médiane longitudinale (LM) de chaque porte (7), lesdites membrures (15 ou 16) portant les pivots (17) de portes.

2. Ensemble d'inverseur de poussée selon la revendication 1, **caractérisé en ce que** les membrures (15,16) s'étendent à peu près jusqu'aux deux-tiers de la distance séparant l'axe du moteur (X-X') de la ligne médiane (LM) longitudinale de chaque porte (7), en partant de l'axe (X-X') du moteur.

3. Ensemble d'inverseur de poussée selon la revendication 1 ou 2, **caractérisé en ce que** les pivots (17) de chacune des portes (7) sont situés approximativement aux deux-tiers (2d) de la distance séparant l'axe du moteur (X-X') de la ligne médiane (LM) longitudinale de la porte, en partant de l'axe du moteur (X-X').

4. Ensemble d'inverseur de poussée selon l'une quelconque des revendications 1 à 3, **caractérisé en ce que** les membrures (15,16) sont situées dans le même plan que la structure fixe du capotage (5).

5. Ensemble d'inverseur de poussée selon l'une quelconque des revendications 1 à 4, **caractérisé en ce que** les membrures (15) sont solidaires de l'avant-corps annulaire (9) du capotage et s'étendent longitudinalement vers l'arrière-corps (12).

6. Ensemble d'inverseur de poussée selon l'une quelconque des revendications 1 à 4, **caractérisé en ce que** les membrures (16) sont solidaires des poutres (10,11) longitudinales de la structure fixe du capotage (5) et ont une forme courbe pour épouser la courbure dudit capotage.

7. Ensemble d'inverseur de poussée selon l'une quelconque des revendications 1 à 4, **caractérisé en ce que,** à chaque porte (7), sont associées deux paires de membrures symétriques (15,16) par rapport à la ligne médiane longitudinale (LM) de la porte (7), chaque paire de membrures (15,16) étant constituée d'une première membrure (15) solidaire de l'avant-corps annulaire (9) du capotage (5) et d'une seconde membrure (16) solidaire d'une poutre longitudinale (10,11) du capotage, ces deux membrures (15,16) étant rigidement liées l'une à l'autre.

8. Ensemble d'inverseur de poussée selon la revendication 7, **caractérisé en ce que** chaque pivot (17) de porte est situé à l'intersection des deux membrures (15,16).

9. Ensemble d'inverseur de poussée selon l'une quelconque des revendications 6 à 8, **caractérisé en ce que** les membrures courbes (16) solidaires des poutres longitudinales (10,11) sont situées au-delà des deux-tiers (l) de la distance (L) séparant avant-corps (9) et arrière-corps (12), en partant de l'avant-corps (9).

10. Ensemble d'inverseur de poussée selon l'une quelconque des revendications précédentes, **caractérisé en ce que**, dans la zone où elle est articulée aux pivots (17), la porte (7) présente, dans son épaisseur, des logements (23,22) qui s'emboîtent sur les membrures (15,16) lorsque la porte (7) est en position escamotée.

11. Ensemble d'inverseur de poussée selon la revendication 10, **caractérisé en ce que** les logements (23) pour les membrures (15) solidaires de l'avant-corps (9) sont pratiqués dans la face interne (7b) de la porte (7) et ont la forme de deux saignées parallèles.

12. Ensemble d'inverseur de poussée selon la revendication 10, **caractérisé en ce que** les logements (22) pour les membrures (16) solidaires des poutres longitudinales (10,11) sont pratiqués dans la face externe (7a) de la porte (7).

13. Ensemble d'inverseur de poussée selon la revendication 12, **caractérisé en ce que** les logements (22) pratiqués dans la face externe (7a) de la porte (7) ont une forme sensiblement triangulaire dont le sommet (25) avoisine le pivot de porte (17) et dont la base débouche sur le bord longitudinal de la porte (7) et vers l'arrière de celle-ci.

14. Ensemble d'inverseur de poussée selon la revendication 13, **caractérisé en ce que** l'arrière de la porte (7) présente une forme (30) sensiblement en queue d'aronde.

## Patentansprüche

1. Schubumkehreinheit für ein Zweikreis-Strahltriebwerk, die zwei verschwenkbare Türen (7) aufweist, die auf Drehzapfen (17) in einer festen Struktur einer den Motor ungefähr konzentrisch zu seiner Längsachse (X-X') umgebenden Außenverkleidung (5) drehbar gelagert sind, wobei diese Außenverkleidung (5) mit der Düse (3) zum Ausstoß eines Stroms (F₁) von heißen Primärgasen einen ringförmigen Kanal (6) für den Umlauf eins Stroms (F₂) von kalten Sekundärgasen abgrenzt, wobei diese verschwenkbaren Türen (7) unter der Einwirkung eines Betätigungssystems zwischen einer weggerückten Stellung, in der sie in der festen Struktur der Verkleidung vorgesehene Öffnungen (PD) verschließen, und einer ausgefahrenen Stellung beweglich sind, in der die Türen (7) radial nach außen vorstehen und den ringförmigen Kanal (6) verschließen, um den Strom (F₂) von Sekundärgasen abzulenken, wobei diese Schubumkehreinheit **dadurch gekennzeichnet** ist, dass:
- die feste Struktur der Verkleidung (5) aus einem stromauf der verschwenkbaren Türen (7) gelegenen ringförmigen Frontkörper (9), zwei symmetrischen und zur Achse (X-X') des Motors parallelen Längsträgern (10, 11) und einem stromab der verschwenkbaren Türen (7) gelegenen ringförmigen Heckkörper (12) besteht, der mit den Längsträgern (10, 11) und dem Frontkörper (9) fest verbunden ist;
- und bei jeder der Türen (7) mindestens zwei Gurte (15 oder 16), die mit der festen Struktur der Verkleidung (5) fest verbunden sind, sich symmetrisch zu einer Ebene, die durch die Achse (X-X') des Motors und die Längsmittellinie (LM) der Türen (7) gelegt ist, bis in einen Bereich erstrecken, der in der oberen Hälfte des Abstands (3d) der Längsmittellinie (LM) jeder Tür (7) von der Achse (X-X') des Motors gelegen ist, wobei diese Gurte (15 oder 16) die Türendrehzapfen (17) tragen.

2. Schubumkehreinheit nach Anspruch 1, **dadurch gekennzeichnet**, dass die Gurte (15, 16) sich von der Achse (X-X') des Motors aus ungefähr über zwei Drittel des Abstands der Längsmittellinie (LM) jeder Tür (7) von der Achse (X-X') des Motors erstrecken.

3. Schubumkehreinheit nach Anspruch 1 oder 2, **dadurch gekennzeichnet**, dass der Abstand der Drehzapfen (17) jeder der Türen (7) von der Achse (X-X') des Motors annähernd zwei Drittel (2d) des Abstands der Längsmittellinie (LM) der Tür von der Achse (X-X') des Motors beträgt.

4. Schubumkehreinheit nach einem der Ansprüche 1 bis 3, **dadurch gekennzeichnet**, dass die Gurte (15, 16) in derselben Ebene wie die feste Struktur der Verkleidung (5) liegen.

5. Schubumkehreinheit nach einem der Ansprüche 1 bis 4, **dadurch gekennzeichnet**, dass die Gurte (15) mit dem ringförmigen Frontkörper (9) der Verkleidung fest verbunden sind und sich in Längsrichtung auf den Heckkörper (12) zu erstrecken.

6. Schubumkehreinheit nach einem der Ansprüche 1 bis 4, **dadurch gekennzeichnet**, dass die Gurte (16) mit den Längsträgern (10, 11) der festen Struktur der Verkleidung (5) fest verbunden sind und eine gekrümmte Form aufweisen, um sich an die Krümmung der Verkleidung anzuschmiegen.

7. Schubumkehreinheit nach einem der Ansprüche 1 bis 4, **dadurch gekennzeichnet**, dass jeder Tür (7) zwei Paare von Gurten (15, 16) zugeordnet sind, die bezüglich der Längsmittellinie (LM) der Tür (7) symmetrisch sind, wobei jedes Paar von Gurten (15, 16) aus einem ersten Gurt (15), der mit dem ringförmigen Frontkörper (9) der Verkleidung (5) fest verbunden ist, und einem zweiten Gurt (16) besteht, der mit einem Längsträger (10, 11) der Verkleidung fest verbünden ist, wobei diese beiden Gurte (15, 16) miteinander starr verbunden sind.

8. Schubumkehreinheit nach Anspruch 7, **dadurch gekennzeichnet**, dass jeder Türdrehzapfen (17) am Schnittpunkt der beiden Gurte (15, 16) angeordnet ist.

9. Schubumkehreinheit nach einem der Ansprüche 6 bis 8, **dadurch gekennzeichnet**, dass der Abstand (1) der mit den Längsträgern (10, 11) fest verbundenen gekrümmten Gurte (16) von dem Frontkörper (9) mehr als zwei Drittel des Abstands (L) des Frontkörpers (9) vom Heckkörper (12) beträgt.

10. Schubumkehreinheit nach einem der vorhergehenden Ansprüche, **dadurch gekennzeichnet**, dass die Tür (7) in dem Bereich, in dem sie auf den Drehzapfen (17) drehbar gelagert ist, in ihrer Dicke Aussparungen (23, 22) aufweist, in die die Gurte (15, 16) eintreten, wenn die Tür (7) in weggerückter Stellung ist.

11. Schubumkehreinheit nach Anspruch 10, **dadurch gekennzeichnet**, dass die Aussparungen (23) für die mit dem Frontkörper (9) fest verbundenen Gurte (15) in der Innenseite (7b) der Tür (7) vorgesehen sind und die Form von zwei parallelen Nuten haben.

12. Schubumkehreinheit nach Anspruch 10, **dadurch gekennzeichnet**, dass die Aussparungen (22) für die mit den Längsträgern (10, 11) fest verbundenen Gurte (16) in der Außenseite (7a) der Tür (7) vorgesehen sind.

13. Schubumkehreinheit nach Anspruch 12, **dadurch gekennzeichnet**, dass die in der Außenseite (7a) der Tür (7) vorgesehenen Aussparungen (22) eine im wesentlichen dreieckige Form haben, deren Scheitel (25) in Nähe des Türdrehzapfens (17) liegt und deren Basis am Längsrand der Tür (7) und auf ihre Heckseite zu ausmündet.

14. Schubumkehreinheit nach Anspruch 13, **dadurch gekennzeichnet**, dass das Heck der Tür (7) im wesentlichen eine Schwalbenschwanzform (30) besitzt.

## Claims

1. Thrust reverser assembly for a bypass jet engine of the type having two pivoting doors (7) articulated about pivots (17) in a fixed structure of an outer cowling (5) surrounding the engine, more or less concentric with the longitudinal axis (X-X') of the said engine, the said outer cowling (5) creating, along with the nozzle (3) through which a flow of hot primary gases (F₁) are ejected, an annular duct (6) for cold bypass gases (F₂) to flow through, the said pivoting doers (7) moving, under the action of an actuation system, between a stowed position in which they close off openings (PD) made in the fixed structure of the cowling and a deployed position in which the said doors (7) project radially outwards and close off the annular duct (6) in order to deflect the flow of bypass gases (F₂), the said thrust reverser assembly being **characterized in that:**
- the fixed structure of the cowling (5) consists of an annular forward structure (9) situated upstream of the pivoting doors (7), of two longitudinal beams (10, 11) which are symmetric and parallel to the axis (X-X') of the engine, and of an annular rear structure (12) situated downstream of the pivoting doors (7) and secured to the longitudinal beams (10, 11) and to the forward structure (9);
- and, for each of the doors (7), at least two struts (15 or 16) secured to the fixed structure of the cowling (5) extend, symmetrically with respect to a plane passing through the axis of the engine (X-X') and the longitudinal centerline (LM) of the doors (7), as far as a region situated in the upper half of the distance (3d) separating the axis of the engine (X-X') from the longitudinal centerline (LM) of each door (7), the said struts (15 or 16) bearing the door pivots (17).

2. Thrust reverser assembly according to Claim 1, **characterized in that** the struts (15, 16) extend more or less as far as two-thirds of the way along the distance separating the axis of the engine (X-X') from the longitudinal centerline (LM) of each door (7), starting from the axis (X-X') of the engine.

3. Thrust reverser assembly according to Claim 1 or 2, **characterized in that** the pivots (17) of each of the doors (7) are situated approximately two-thirds (2d) of the way along the distance separating the axis of the engine (X-X') from the longitudinal centerline (LM) of the door, starting from the axis of the engine (X-X').

4. Thrust reverser assembly according to any one of Claims 1 to 3, **characterized in that** the struts (15, 16) are situated in the same plane as the fixed structure of the cowling (5).

5. Thrust reverser assembly according to any one of Claims 1 to 4, **characterized in that** the struts (15) are secured to the annular forward structure (9) of the cowling and extend longitudinally towards the rear structure (12).

6. Thrust reverser assembly according to any one of Claims 1 to 4, **characterized in that** the struts (16) are secured to the longitudinal beams (10, 11) of the fixed structure of the cowling (5) and have a curved shape in order to match the curvature of the said cowling.

7. Thrust reverser assembly according to any one of Claims 1 to 4, **characterized in that** associated with each door (7) are two pairs of struts (15, 16) which are symmetric with respect to the longitudinal centerline (LM) of the door (7), each pair of struts (15, 16) consisting of a first strut (15) secured to the annular forward structure (9) of the cowling (5) and of a second strut (16) secured to a longitudinal beam (10, 11) of the cowling, these two struts (15, 16) being rigidly joined together.

8. Thrust reverser assembly according to Claim 7, **characterized in that** each door pivot (17) is situated at the intersection of the two struts (15, 16).

9. Thrust reverser assembly according to any one of Claims 6 to 8, **characterized in that** the curved struts (16) secured to the longitudinal beams (10, 11) are situated more than two-thirds (l) of the way along the distance (L) separating forward structure (9) and rear structure (12), starting from the forward structure (9).

10. Thrust reverser assembly according to any one of the preceding claims, **characterized in that**, in the area where it is articulated to the pivots (17), the door (7) has, in its thickness, housings (23, 22) which fit over the struts (15, 16) when the door (7) is in the stowed position.

11. Thrust reverser assembly according to Claim 10, **characterized in that** the housings (23) for the struts (15) secured to the forward structure (9) are made in the internal face (7b) of the door (7) and have the shape of two parallel channels.

12. Thrust reverser assembly according to Claim 10, **characterized in that** the housings (22) for the struts (16) secured to the longitudinal beams (10, 11) are made in the external face (7a) of the door (7).

13. Thrust reverser assembly according to Claim 12, **characterized in that** the housings (22) made in the external face (7a) of the door (7) have a substantially triangular shape, the apex (25) of which is close to the door pivot (17), and the base of which emerges on the longitudinal edge of the door (7) and towards the rear thereof.

14. Thrust reverser assembly according to Claim 13, **characterized in that** the rear of the door (7) has a substantially dovetail shape (30).
